# EUROPEAN PATENT APPLICATION

(11) **EP 2 813 941 A2**
(43) Date of publication of application: **17.12.2014**
(21) Application number: 14169082.6
(22) Date of filing: 20.05.2014
(51) Int. Cl.: G06F 3/06

(54) **Storage system and operation management method of storage system**

(30) Priority: 12.06.2013 JP 2013124158
(71) Applicant: FUJITSU LIMITED, Kawasaki-shi, Kanagawa 211-8588 (JP)
(72) Inventor: Miura, Kanji, Kanagawa, 211-8588 (JP); Sakai, Motohiro, Kanagawa, 211-8588 (JP); Kobayashi, Akihito, Kanagawa, 211-8588 (JP)
(74) Representative: Hoffmann Eitle

(57) **Abstract**

A policy determining unit (48a) determines an allocation method for blocks on the basis of information on a hierarchical policy stored in a policy management table (42) and information on a volume stored in a volume management table (46). Then, on the basis of the determination result performed by the policy determining unit (48a), a first allocating unit (48b) performs allocation on the basis of the specified capacity and a second allocating unit (48c) performs allocation on the basis of the specified percentage for each volume.

## Description

### FIELD

The embodiment discussed herein is related to a storage system and an operation management method of a storage system.

### BACKGROUND

Conventionally, in storage systems, automated storage tiering (AST) is performed by using storages each having different performance. Examples of the storages having different performance include hard disk drives (HDDs) and solid state drives (SSDs). Furthermore, for HDDs, there are devices having different access performance. The AST automatically relocates data to storages having different performance when an information processing system is running. Consequently, by dynamically changing data locations using the AST when the information processing system is running, the storage systems can follow the change in the performance state occurring during the operation of the system.

The AST monitors an access to a volume present in a pool constituted by hierarchizing storages having different performance and relocates data among subpools in accordance with a hierarchical policy that is set by an administrator of the storage system. The pool mentioned here is, for example, a single virtual disk constituted by multiple HDDs or SSDs. Furthermore, the subpool mentioned here is obtained by dividing the pool on the basis of its performance. The pool that includes multiple subpools as multiple tiers is referred to as a tier pool (or, a hierarchical pool). Furthermore, the hierarchical policy mentioned here is information that is used to define a policy related to relocation of data, such as the timing, the relationship between the access frequency of data and a subpool in which data is to be located.

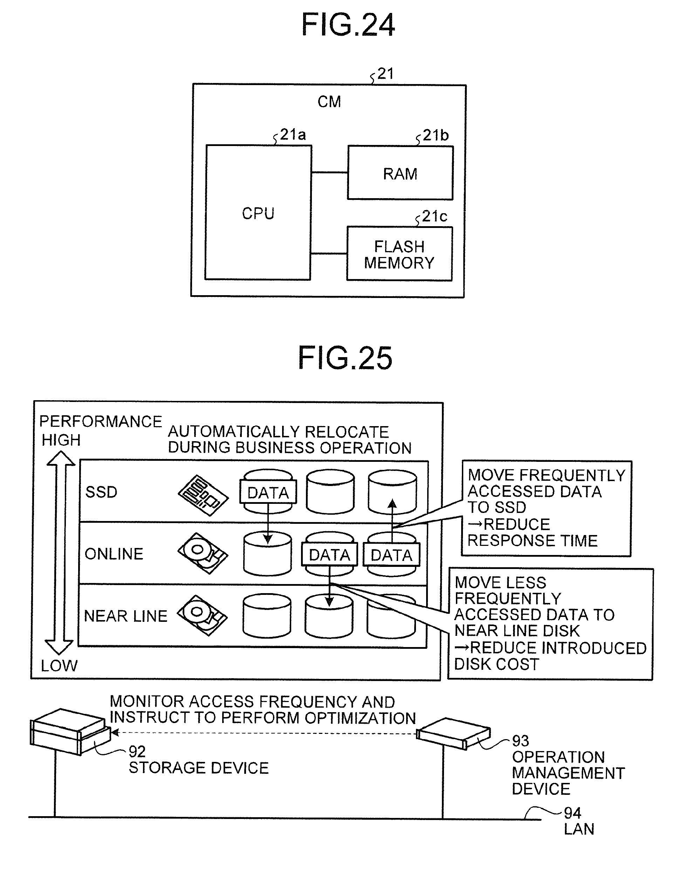

FIG. 25 is a schematic diagram illustrating tiering control. FIG. 25 illustrates a storage system in which a storage device 92 is connected to an operation management device 93 via a LAN 94. The storage device 92 includes three subpools, i.e., an SSD, an on-line disk, and a near line disk. From among the three subpools, the performance of the SSD is the highest and the performance of the near line disk is the lowest.

The operation management device 93 manages the operation of the storage device 92 and has a function of the AST. By allocating frequently accessed data to the high performance SSD and by allocating less frequently accessed data to the low performance and low price near line disk, the AST can improve the performance of the system while reducing the cost. Furthermore, with the AST, because the location of data is dynamically changed during the operation of the system, the layout design is not needed. Consequently, it is possible to implement the reduction of the workload imposed on an administrator of the storage system and the reduction of the management cost.

Furthermore, there is a storage system that moves a data block, in which the access frequency of data exceeds the upper limit that is specified in advance, to a storage device in a high performance group and that moves a data block, in which the data access frequency below the lower limit that is specified in advance, to a storage device in a low performance group (for example, see Japanese Laid-open Patent Publication No. 2003-108317). Furthermore, there is a conventional technology that compares, in a storage device having two or more storage media, the use frequency of each piece of data with the reference use frequency and that moves, if the use frequency of the data is low, the data to a storage medium in which the access time is longer (for example, see Japanese Laid-open Patent Publication No. 3-48321).

The administrator of the storage system sets the reference of relocation of data by specifying the value of Input/Output per second (IOPS) by using the hierarchical policy. For example, the administrator of the storage system specifies the reference of the relocation of data by using a hierarchical policy such as relocating the data to the SSD, if data with 501 IOPS or more is present.

The AST relocates data on the basis of the IOPS value specified by the hierarchical policy. Consequently, there is a problem in that a high performance subpool is not used even when a free space is present in the high performance subpool. For example, in the hierarchical policy in which, if data with IOPS value that is equal to or greater than 501 is present, data is relocated to an SSD, if no data with 501 IOPS or more is present, the SSD is not used. Furthermore, if the number of pieces of data with 501 IOPS is small, a free space is not used even if the free space is present in the SSD.

Accordingly, it is an object in one aspect of an embodiment of the invention to provide a storage system that efficiently uses a high performance storage from among multiple storages each having different performance.

### SUMMARY

According to an aspect of an embodiment, a storage system includes an allocating unit that sequentially allocates, by giving priority to a high performance storage from among multiple storages each having different performance, one of the storages to data in the order the access frequency of the data is high; a identifying unit that identifies, as the target for relocation from among pieces of data to each of which a storage is allocated by the allocating unit, data to which a storage that is different from the storage that currently stores the data is allocated; and a control unit that relocates the data identified, by the identifying unit, as the target for the relocation.

### BRIEF DESCRIPTION OF DRAWINGS

FIG. 1 is a schematic diagram illustrating the configuration of a storage system according to an embodiment of the present invention;
FIG. 2 is a schematic diagram illustrating the configuration of a storage device;
FIG. 3 is a schematic diagram illustrating the functional configuration of an operation management device;
FIG. 4 is a schematic diagram illustrating the functional configuration of a storage management unit;
FIG. 5 is a schematic diagram illustrating an example of a policy management table;
FIG. 6 is a schematic diagram illustrating an example of a pool management table;
FIG. 7 is a schematic diagram illustrating an example of information on each block stored in a performance information storing unit;
FIG. 8 is a schematic diagram illustrating an example of evaluation information stored in an evaluation result storing unit;
FIG. 9A is a schematic diagram illustrating an example of an access list;
FIG. 9B is a schematic diagram illustrating the access list after a relocation destination has been allocated;
FIG. 10 is a schematic diagram illustrating allocation performed on the basis of a specified percentage;
FIG. 11 is a schematic diagram illustrating an example of a relocation list;
FIG. 12 is a schematic diagram illustrating a block that is not targeted for relocation;
FIG. 13 is a schematic diagram illustrating the functional configuration of an automated storage tiering unit;
FIG. 14 is a schematic diagram illustrating the functional configuration of a CM;
FIG. 15 is a schematic diagram illustrating a handling CM;
FIG. 16 is a flowchart illustrating the flow of a process performed by the storage system;
FIG. 17 is a flowchart illustrating the flow of a policy registration process;
FIG. 18 is a flowchart illustrating the flow of a tier pool registration process;
FIG. 19 is a flowchart illustrating the flow of a volume creating process;
FIG. 20 is a flowchart illustrating the flow of a performance information collecting process;
FIG. 21A is a first flowchart illustrating the flow of a relocation process;
FIG. 21B is a second flowchart illustrating the flow of a relocation process;
FIG. 21C is a third flowchart illustrating the flow of a relocation process;
FIG. 22 is a flowchart illustrating the flow of a relocation result displaying process;
FIG. 23 is a schematic diagram illustrating the hardware configuration of a computer that executes an operation management program;
FIG. 24 is a schematic diagram illustrating the hardware configuration of the CM; and
FIG. 25 is a schematic diagram illustrating tiering control.

### DESCRIPTION OF EMBODIMENT(S)

Preferred embodiments of the present invention will be explained with reference to accompanying drawings. The present invention is not limited to the embodiment. Furthermore, in the following, a storage, such as a HDD, an SSD, or the like is referred to as a "disk".

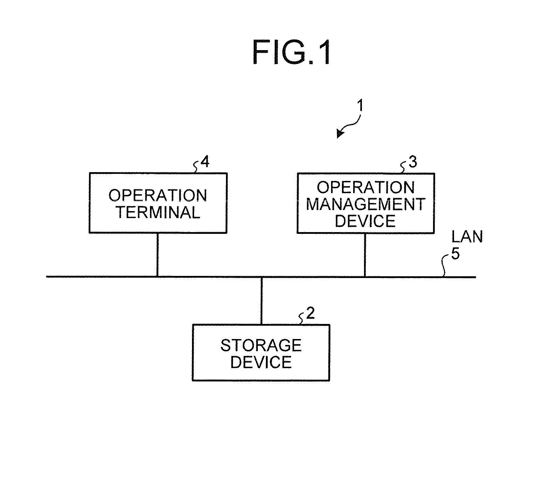

In the following, the configuration of a storage system according to an embodiment will be described first. FIG. 1 is a schematic diagram illustrating the configuration of a storage system according to an embodiment of the present invention. As illustrated in FIG. 1, a storage system 1 includes a storage device 2, an operation management device 3, and an operation terminal 4. The storage device 2, the operation management device 3, and the operation terminal 4 are connected with each other via a local area network (LAN) 5.

The storage device 2 includes SSDs and HDDs and provides a tier pool. The operation management device 3 manages the operation of the storage device 2 and has an AST function. The operation terminal 4 is a device that is used by an administrator of the storage system 1 (hereinafter, simply referred to as an "administrator") to interact with the operation management device 3.

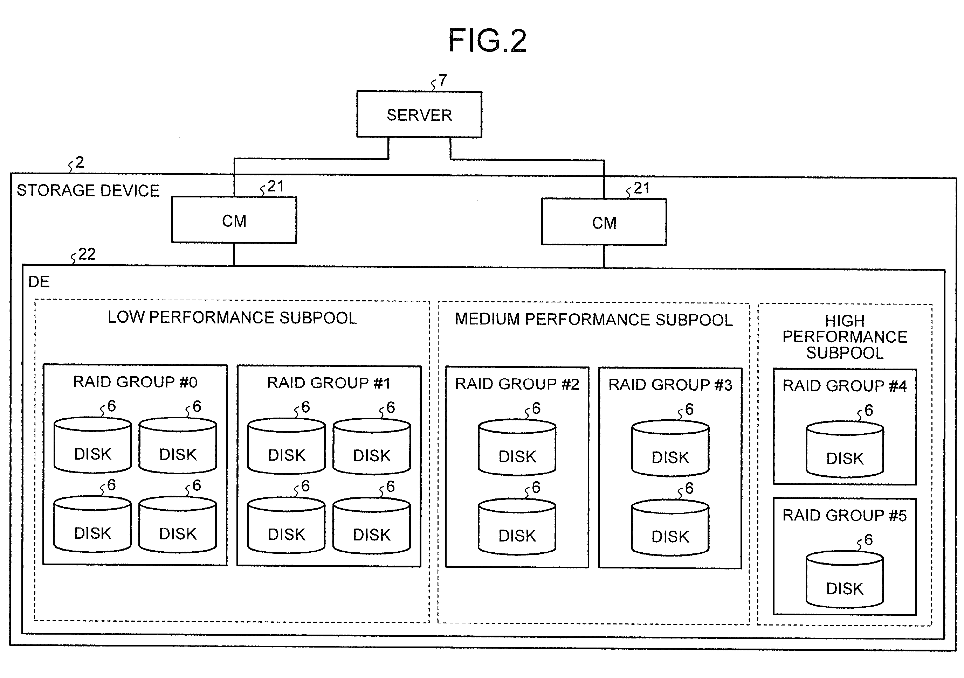

FIG. 2 is a schematic diagram illustrating the configuration of the storage device 2. As illustrated in FIG. 2, the storage device 2 includes two controller modules (CMs) 21 and a drive enclosure (DE) 22. In FIG. 2, for convenience of description, the single DE 22 is illustrated; however, in practice, the storage device 2 includes multiple DEs 22.

The CMs 21 are devices each of which controls the storage device 2 on the basis of the request from a server 7 and are duplexed. The DE 22 is a structure on which SSDs and HDDs are mounted. The DE 22 includes multiple disks 6 and provides a tier pool that includes three subpools, i.e., a low performance subpool, a medium performance subpool, and a high performance subpool.

Each of the subpools includes multiple redundant arrays of inexpensive disks (RAID) groups. For example, the low performance subpool includes a RAID group #0 and a RAID group #1 and the medium performance subpool includes a RAID group #2 and a RAID group #3. Furthermore, the high performance subpool includes a RAID group #4 and a RAID group #5. Furthermore, each of the RAID groups includes the multiple disks 6.

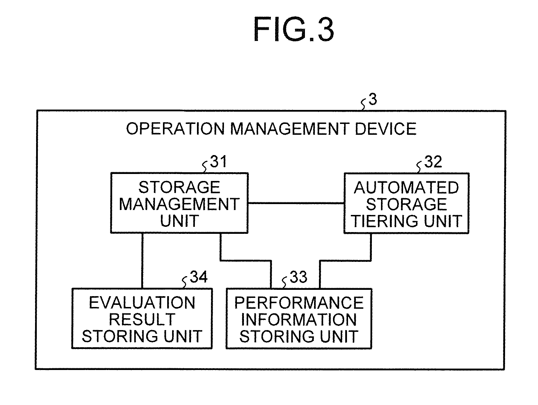

In the following, the functional configuration of the operation management device 3 will be described. FIG. 3 is a schematic diagram illustrating the functional configuration of the operation management device 3. As illustrated in FIG. 3, the operation management device 3 includes a storage management unit 31, an automated storage tiering unit 32, a performance information storing unit 33, and an evaluation result storing unit 34.

The storage management unit 31 manages the storage device 2. Specifically, the storage management unit 31 manages a hierarchical policy, manages a tier pool, manages a volume, and identifies a relocation block on the basis of the hierarchical policy. The block mentioned here is a unit of relocated data and is, for example, data with 1.3 gigabytes (GB) in size.

The automated storage tiering unit 32 performs the AST on the basis of the instruction from the storage management unit 31. Specifically, the automated storage tiering unit 32 acquires performance information, such as IOPS values, from the storage device 2; notifies the start of the tiering control of the storage device 2; and requests relocation. Furthermore, the automated storage tiering unit 32 requests the storage device 2 to create a tier pool, a volume, and the like.

The performance information storing unit 33 stores therein performance information, such as IOPS values acquired by the automated storage tiering unit 32 from the storage device 2. Furthermore, the information stored in the performance information storing unit 33 is used when the storage management unit 31 identifies a relocation block. The performance information storing unit 33 will be described in detail later.

The evaluation result storing unit 34 stores therein the result obtained by the storage management unit 31 analyzing and evaluating the performance information stored in the performance information storing unit 33. The evaluation result storing unit 34 will be described in detail later.

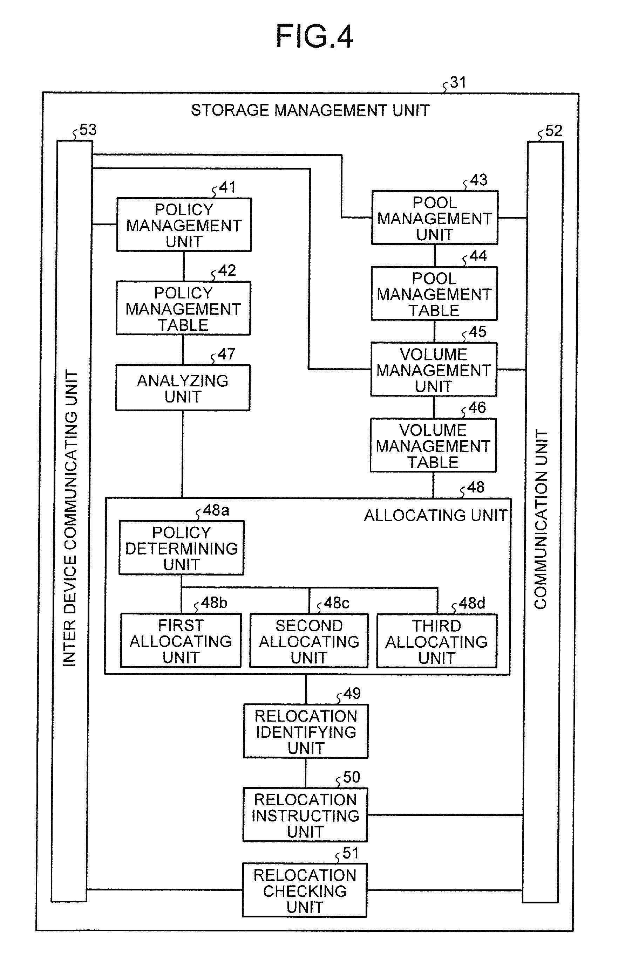

In the following, the functional configuration of the storage management unit 31 will be described. FIG. 4 is a schematic diagram illustrating the functional configuration of the storage management unit 31. As illustrated in FIG. 4, the storage management unit 31 includes a policy management unit 41, a policy management table 42, a pool management unit 43, a pool management table 44, and a volume management unit 45. Furthermore, the storage management unit 31 includes a volume management table 46, an analyzing unit 47, an allocating unit 48, a relocation identifying unit 49, a relocation instructing unit 50, a relocation checking unit 51, a communication unit 52, and an inter device communicating unit 53.

The policy management unit 41 receives an instruction to create a hierarchical policy received from the operation terminal 4, registers the hierarchical policy in the policy management table 42, and instructs the operation terminal 4 to display the information on the registered hierarchical policy.

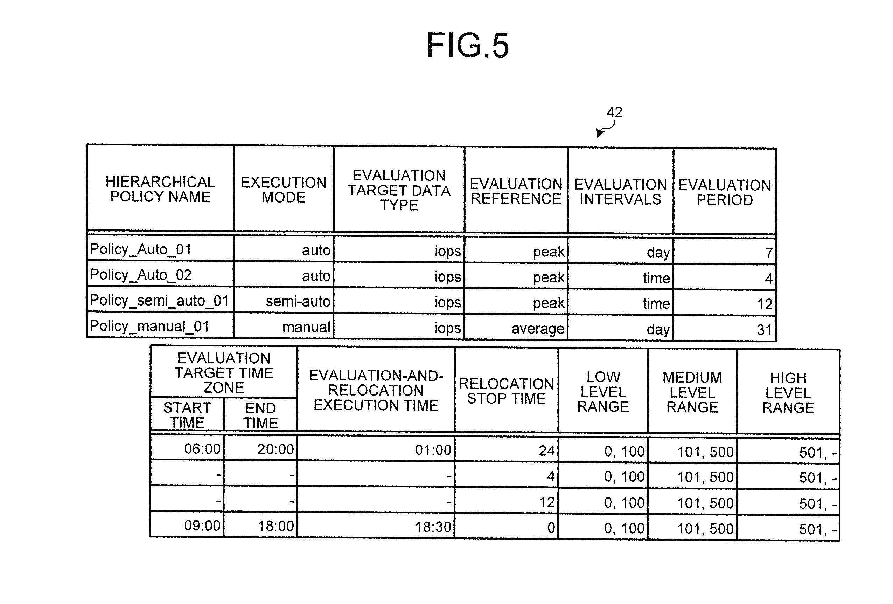

The policy management table 42 stores therein information on the hierarchical policy that is registered by the policy management unit 41. FIG. 5 is a schematic diagram illustrating an example of the policy management table 42. As illustrated in FIG. 5, the policy management table 42 stores therein, for each hierarchical policy, the hierarchical policy name, the execution mode, the evaluation target data type, the evaluation reference, the evaluation intervals, the evaluation period, the evaluation target time zone, the evaluation-and-relocation execution time, the relocation stop time, the high level range, the medium level range, and the low level range.

The hierarchical policy name is the name that is used to identify a hierarchical policy. The execution mode indicates the mode for performing the relocation, such as "auto" in which relocation is automatically performed, "semi-auto" in which relocation is semiautomatically performed on the basis of the interaction with an administrator, and "manual" in which relocation is performed due to an instruction from an administrator. The evaluation target data type indicates the type of evaluation data that is used to evaluate the relocation target. An example of the evaluation target data type includes "iops" that indicates an IOPS value.

The evaluation reference indicates the reference that is used to evaluate evaluation data specified by the evaluation target data type. Examples of the evaluation reference includes "peak" in which evaluation is performed by using the peak value as the reference and "average" in which evaluation is performed by using the average value as the reference. The evaluation intervals indicate the unit of intervals for evaluating evaluation data. The item of "day" indicates that a unit is a day and the item of "time" indicates that a unit is an hour.

The evaluation period indicates the intervals of evaluation to be performed and a unit thereof is specified by the evaluation intervals. For example, if the evaluation interval is indicated by "day" and if the evaluation period is "7", evaluation is performed every "7 days". The evaluation target time zone indicates, by using the start time and the end time, the time zone for the data that is to be evaluated. The evaluation-and-relocation execution time indicates the time at which evaluation and relocation is performed. The relocation stop time indicates the time at which relocation is stopped.

The low level range indicates the range of the IOPS values of data that is to be located in a low performance subpool; the medium level range indicates the range of the IOPS values of data that is to be located in a medium performance subpool; and the high level range indicates the IOPS values of data that is to be located in a high performance subpool.

For example, in a hierarchical policy with the hierarchical policy name of "Policy_Auto_01", the evaluation is automatically performed by using the IOPS value; the evaluation is performed by taking the peak value as a reference, and the evaluation is performed every "7 days". The start time of data in the evaluation target time zone is 6:00 and the end time is 20:00. Evaluation and relocation is performed at 1:00 and stops after 24 hours have elapsed. The data with the IOPS value of "100" or less is stored in a low performance subpool; the data with the IOPS value between "101" and "500" is stored in a medium performance subpool, the data with the IOPS value of "501" or more is stored in a high performance subpool.

A description will be given here by referring back to FIG. 4. The pool management unit 43 receives an instruction to create a tier pool from the operation terminal 4 and then instructs the automated storage tiering unit 32 to create a tier pool. Then, the pool management unit 43 registers the created tier pool in the pool management table 44 and instructs the operation terminal 4 to display the information on the registered tier pool.

Furthermore, when a tier pool is created, the pool management unit 43 determines whether one of the disks 6 is specified. If one of the disks 6 is not specified, the pool management unit 43 instructs the storage device 2 via the automated storage tiering unit 32 to create a tier pool with an amount specified by an administrator. Because the pool management unit 43 instructs the storage device 2 to create a tier pool with a specified amount, the administrator can easily create a tier pool without being aware of the installation status of the disks 6.

Furthermore, on the basis of an instruction from the administrator, the pool management unit 43 creates a tier pool constituted by a single subpool and then registers the created tier pool in the pool management table 44. Because the pool management unit 43 registers the hierarchical policy constituted by a single subpool in the pool management table 44, the administrator can acquire the information that is used to compare with a case in which the AST operation is performed.

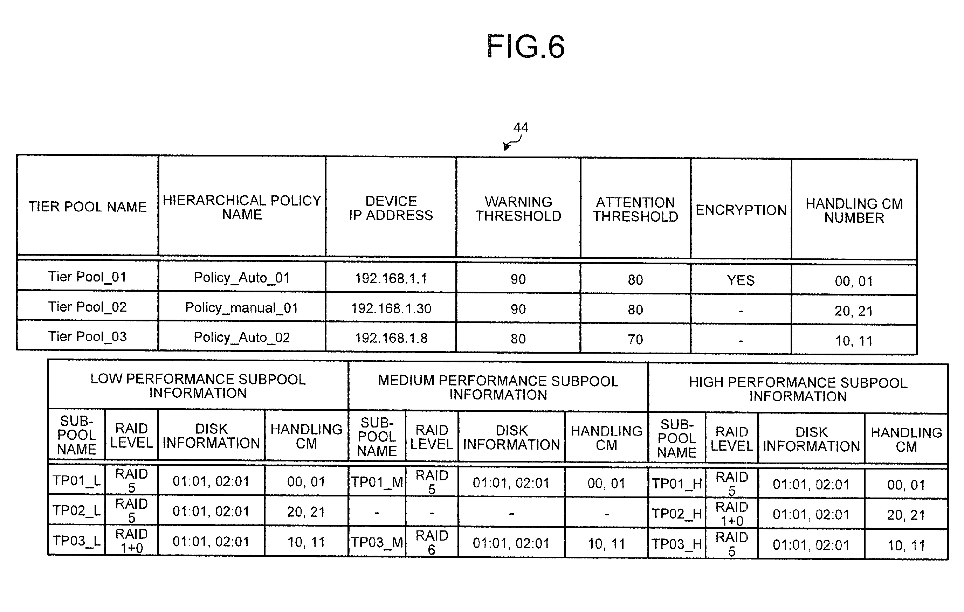

The pool management table 44 stores therein information on a tier pool registered by the pool management unit 43. FIG. 6 is a schematic diagram illustrating an example of the pool management table 44. As illustrated in FIG. 6, the pool management table 44 stores therein, for each tier pool, the tier pool name, the hierarchical policy name, the device IP address, the warning threshold, the attention threshold, the encryption, the handling CM number, the low performance subpool information, the medium performance subpool information, and the high performance subpool information.

The tier pool name indicates the name that is used to identify a tier pool. The hierarchical policy name indicates a policy used for a tier pool. The device IP address indicates the IP address of the storage device 2 that provides a tier pool. The warning threshold indicates a threshold used to output a warning when a value exceeds the warning threshold and a unit of the warning threshold is %. The attention threshold indicates a threshold for outputting an attention note when a value exceeds the attention threshold and a unit of the attention threshold is %. The encryption indicates whether data stored in a tier pool is to be encrypted. The handling CM number indicates a number used for the CM 21 that handles the management of the tier pool. The handling CM will be described in detail later.

The low performance subpool information indicates information on a low performance subpool included in a tier pool. The medium performance subpool information indicates information on a medium performance subpool included in a tier pool. Furthermore, the high performance subpool information indicates information on a high performance subpool included in a tier pool.

Items of the information on the subpool include the subpool name, the RAID level, disk information, and a handling CM. The subpool name is the name used to identify a subpool. The RAID level indicates the RAID level of a subpool and includes, for example, "RAID5", "RAID1+0", or the like. The disk information indicates a RAID group number of disks constituting a subpool and a number used in the group. The handling CM indicates a number used for the CM 21 that handles a subpool.

A description will be given here by referring back to FIG. 4. In response to an instruction to create a volume from the operation terminal 4, the volume management unit 45 instructs the automated storage tiering unit 32 to create a volume. Furthermore, the volume management unit 45 registers the volume created in a storage device 2 in the volume management table 46 and then instructs the operation terminal 4 to display the information on the registered volume. Furthermore, if an administrator specifies a percentage of each of subpools in a tier pool, the volume management unit 45 registers the percentages in the volume management table 46. The volume management table 46 stores therein the information on the volume registered by the volume management unit 45.

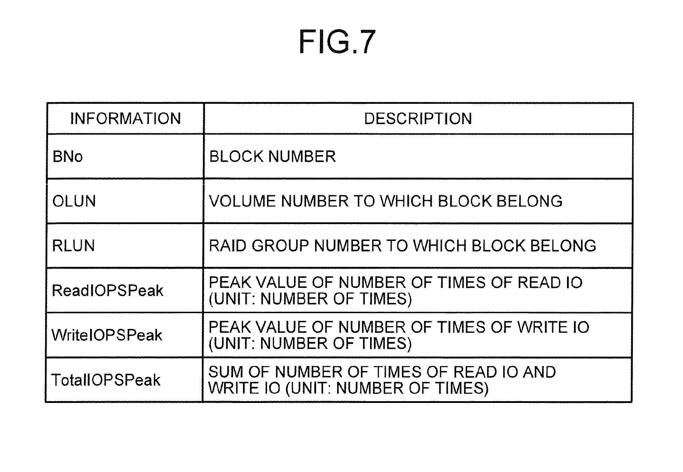

The analyzing unit 47 analyzes and evaluates the performance information stored in the performance information storing unit 33 and stores the evaluation result in the evaluation result storing unit 34. FIG. 7 is a schematic diagram illustrating an example of information on each block stored in the performance information storing unit 33. As illustrated in FIG. 7, the information on each block stored by the performance information storing unit 33 includes BNo, OLUN, RLUN, ReadIOPSPeak, WriteIOPSPeak, and TotalIOPSPeak. The information on BNo is a block number. The information on OLUN is a volume number to which a block belongs. The information on RLUN is a RAID group number to which the block belongs. The information on ReadIOSPPeak is a peak value of the number of times of Read IO. The information on WriteIOSPPeak is a peak value of the number of times of Write IO. The information on TotalIOSPPeak is the peak value of the sum of the number of times of the Read IO and the Write IO. The analyzing unit 47 determines the access frequency of each block by using, for example, information on TotalIOSPPeak.

The performance information storing unit 33 stores performance information collected at one time in a file named "IOPS-PK_ii_YYYYMMDD@HHMM-yyyymmdd@hhmm.CSV". In this file, the symbol "ii" indicates the intervals of performance monitoring represented by minutes. Furthermore, "YYYYMMDD" indicates the start date of the acquisition of performance information and "HHMM" indicates the start time of the acquisition of the performance information. Furthermore, "yyyymmdd" indicates the end date of the performance information and "hhmm" indicates the end time of the acquisition of performance information.

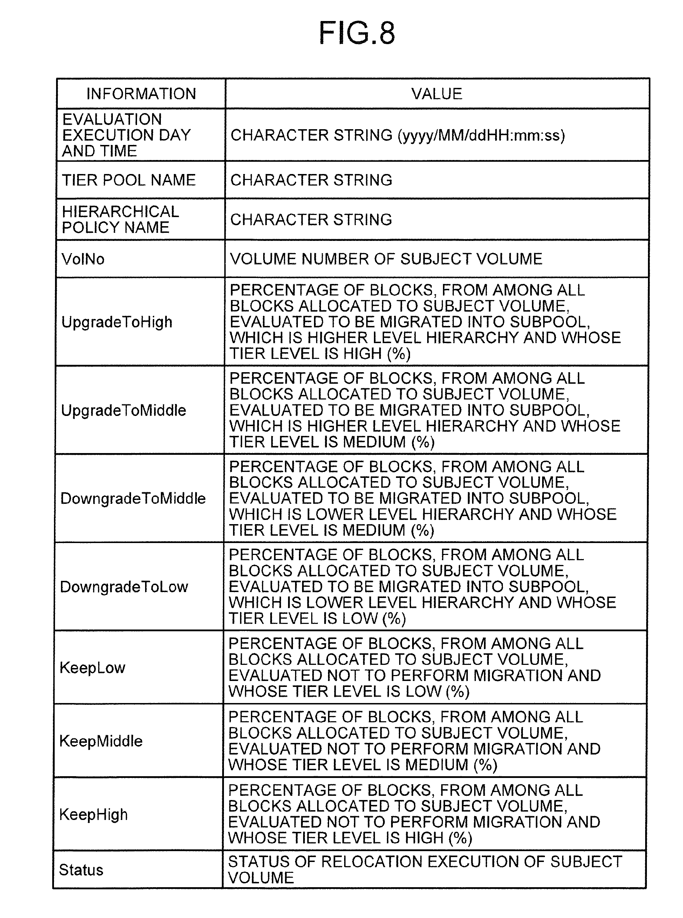

FIG. 8 is a schematic diagram illustrating an example of evaluation information stored in the evaluation result storing unit 34. As illustrated in FIG. 8, the evaluation information includes the evaluation execution day and time, the tier pool name, the hierarchical policy name, and the evaluation data. The evaluation data includes VolNo, UpgradeToHigh, UpgradeToMiddle, DowngradeToMiddle, DowngradeToLow, KeepLow, KeepMiddle, KeepHigh, and Status.

The information on "VolNo" is a volume number used to identify a volume. The information on "UpgradeToHigh" indicates a percentage of blocks evaluated to be migrated into a subpool which is a higher level hierarchy and whose tier level is high. The information on "UpgradeToMiddle" indicates a percentage of blocks evaluated to be migrated into a subpool which is a higher level hierarchy and whose tier level is medium. The information on "DowngradeToMiddle" indicates a percentage of blocks evaluated to be migrated into a subpool, which is a lower level hierarchy and whose tier level is medium. The information on "DowngradeToLow" indicates a percentage of blocks evaluated to be migrated into a subpool which is a lower level hierarchy and whose tier level is low.

The information on "KeepLow" indicates a percentage of blocks evaluated not to perform migration and whose tier level is low. The information on "KeepMiddle" indicates a percentage of blocks evaluated not to perform migration and whose tier level is medium. The information on "KeepHigh" indicates a percentage of blocks evaluated not to perform migration and whose tier level is high. The Status is the status of relocation execution of a volume.

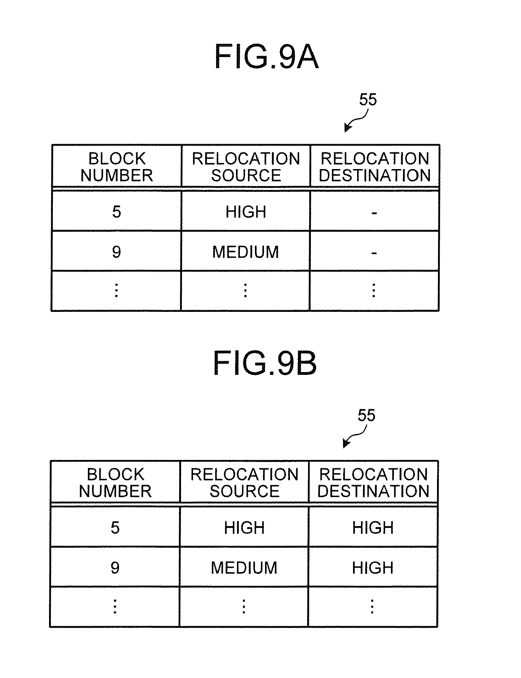

Furthermore, the analyzing unit 47 creates, on the basis of the evaluation results, an access list in which blocks are listed in the order the access frequency of a block is high. FIG. 9A is a schematic diagram illustrating an example of an access list created by the analyzing unit 47. As illustrated in FIG. 9A, an access list 55 is a list that stores therein, in an associated manner, the block number, the relocation source that indicates the current relocation position of a block, and the relocation destination, which are listed in the order the access frequency of a block is high. In FIG. 9A, the access frequency of the block with the block number of "5" is the highest and the relocation source thereof is "high". The access frequency of the block with the block number of "9" is the second highest and the relocation source of thereof is "medium". The relocation destination is allocated by the allocating unit 48.

The allocating unit 48 allocates, on the basis of the hierarchical policy and information on a volume, the relocation destination for a block and then writes the relocation destination into the access list 55. FIG. 9B is a schematic diagram illustrating the access list 55 that is illustrated in FIG. 9A and that is obtained after the relocation destinations have been allocated by the allocating unit 48. As illustrated in FIG. 9B, for the block with the block number of "5", "high" is allocated to the relocation destination. For the block with the block number of "9", "medium" is allocated to the relocation destination. For the relocation destinations in the access list 55, "high" is listed first, then "medium" is listed, and "low" is listed at the bottom.

The allocating unit 48 includes a policy determining unit 48a, a first allocating unit 48b, a second allocating unit 48c, and a third allocating unit 48d. The policy determining unit 48a determines an allocation method of a block on the basis of information on a hierarchical policy stored in the policy management table 42 and information on a volume. Examples of the allocation method includes allocation performed on the basis of the specified capacity, allocation performed on the basis of the specified percentage, allocation performed on the basis of the specified single subpool, and allocation performed on the basis of the specified IOPS value.

The first allocating unit 48b performs allocation on the basis of the specified capacity. Specifically, the first allocating unit 48b sequentially allocates blocks to subpools, in the order the access frequency of a block is high, by giving priority to a high performance subpool within the capacity of each subpool. Because the first allocating unit 48b performs the allocation on the basis of the specified capacity, the storage system 1 can always use high performance subpool without waste. Furthermore, when any value is not specified in the low level range, in the medium level range, and in the high level range in the policy management table 42, the policy determining unit 48a determines that allocation has been performed on the basis of the specified capacity. The information indicating whether allocation has been performed on the basis of the specified capacity is registered in the policy management table 42 by the policy management unit 41 when the policy management unit 41 creates a hierarchical policy.

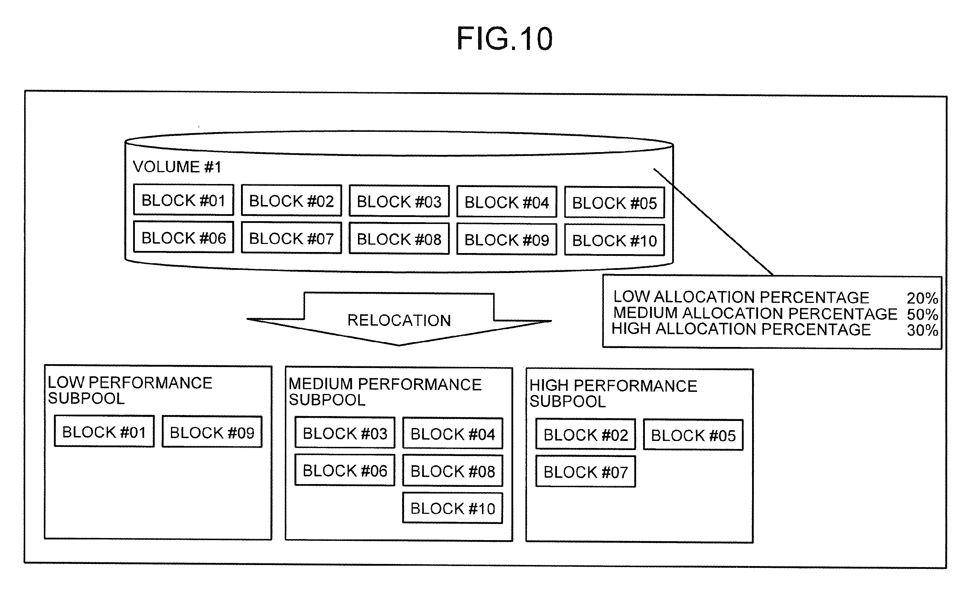

The second allocating unit 48c performs allocation on the basis of the specified percentage in volume units. Specifically, on the basis of the specified percentage and the specified access frequency with respect to the specified volume, the second allocating unit 48c allocates blocks to the low performance subpool, the medium performance subpool, and the high performance subpool. FIG. 10 is a schematic diagram illustrating allocation performed on the basis of the specified percentage. As illustrated in FIG. 10, when a low allocation percentage 20%, a medium allocation percentage 50%, and a high allocation percentage 30% are set to a volume #1 that includes 10 blocks #01 and #10, the blocks #01 and #09 are allocated to the low performance subpool in the order the access frequency is low. Furthermore, five blocks #03, #04, #06, #08, and #10 with next lower access frequencies are allocated to the medium performance subpool. Furthermore, three blocks #02, #05, and #07 with top 3 highest access frequencies are allocated to the high performance subpool. Because the second allocating unit 48c performs the allocation on the basis of the specified percentage in volume units, an administrator can properly use, for each volume, subpools and thus can create a tier pool suitable for business. Furthermore, if any specified percentage is present in the volume information stored in the volume management table 46, the policy determining unit 48a determines that the allocation is performed on the basis of the specified percentage.

The third allocating unit 48d performs allocation on the basis of the specified IOPS value. Specifically, similarly to the conventional method, the third allocating unit 48d allocates a block to a subpool on the basis of an IOPS value specified by a hierarchical policy.

If only a single subpool is specified, relocation is not performed. An administrator allocates all blocks to a single subpool, thereby obtaining information used to compare with a case in which an AST operation is performed.

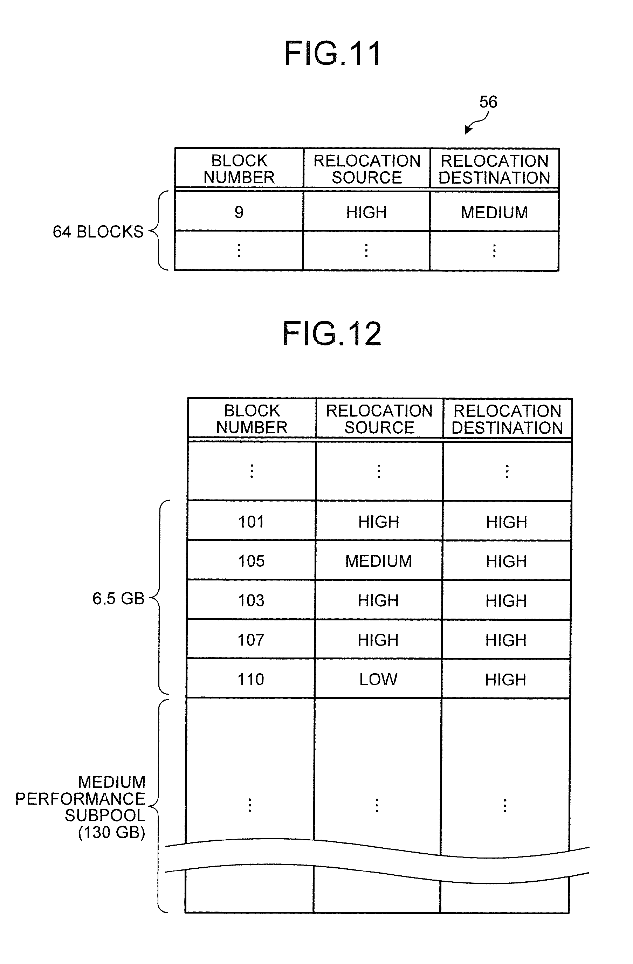

The relocation identifying unit 49 creates a relocation list by selecting a block, from the access list 55, in which the relocation source and the relocation destination differ. FIG. 11 is a schematic diagram illustrating an example of a relocation list. As illustrated in FIG. 11, a relocation list 56 is created by associating, for each block targeted for relocation, the block number, the relocation source, and the relocation destination with each other. For example, the block with the block number of "9" is targeted for relocation and is relocated from the high performance subpool to the medium performance subpool.

The number of blocks registered in the relocation list 56 is 64. When the number of blocks registered in the relocation list 56 becomes 64, the relocation identifying unit 49 requests the relocation instructing unit 50 to relocate the blocks and clears the relocation list 56. Then, the relocation identifying unit 49 repeatedly creates the relocation list 56, requests the relocation, and clears the relocation list 56 until a relocation source and a relocation destination is not present in the access list 55.

Furthermore, for the blocks included in an adjacent subpool with the capacity of 5% in the access list 55, the relocation identifying unit 49 does not use the blocks as the target for the relocation to the adjacent subpool. FIG. 12 is a schematic diagram illustrating a block that is not targeted for relocation. FIG. 12 illustrates that the capacity of the medium performance subpool is 130 GB and illustrates, from among blocks that are to be relocated to a high performance subpool, five blocks that are adjacent to the medium performance subpool and that have the block numbers of "101", "105", "103", "107", and "110". Here, the five blocks are the blocks included in the capacity of 6.5 GB, which is 5% of 130 GB that corresponds to the capacity of the adjacent medium performance subpool.

In FIG. 12, because the block with the block number of "105" is the block included in 5% of the capacity of the medium performance subpool, this block is not targeted for relocation from the medium performance subpool to the high performance subpool. In contrast, because the block with the block number of "110" is the block included in 5% of the capacity of the medium performance subpool but is to be relocated from the low performance subpool to the high performance subpool, this block is targeted for the relocation.

As described above, for the blocks included in 5% of the capacity of the adjacent subpool in the access list 55, the relocation identifying unit 49 does not use the blocks as the target for the relocation to the adjacent subpool. Consequently, the storage device 2 can prevent less efficient relocation, such as a case in which a block whose IOPS value is similar to that of the block stored in the adjacent subpool is moved to the adjacent subpool. In this example, 5% is used; however, the relocation identifying unit 49 may also use an arbitrary percentage instead of 5%.

On the basis of the request from the relocation identifying unit 49, the relocation instructing unit 50 instructs the automated storage tiering unit 32 to relocate the blocks registered in the relocation list 56. Furthermore, the relocation instructing unit 50 receives information related to the relocation from the automated storage tiering unit 32 and then instructs the operation terminal 4 to display the information related to the relocation.

On the basis of the instruction from the operation terminal 4, the relocation checking unit 51 instructs the automated storage tiering unit 32 to acquire progress information on the relocation. When the progress information is received, the relocation checking unit 51 sends the progress information to the terminal device and instructs the terminal device to display the relocation result.

The communication unit 52 communicates with the automated storage tiering unit 32 and the inter device communicating unit 53 communicates with the operation terminal 4 and the storage device 2 via the LAN 5.

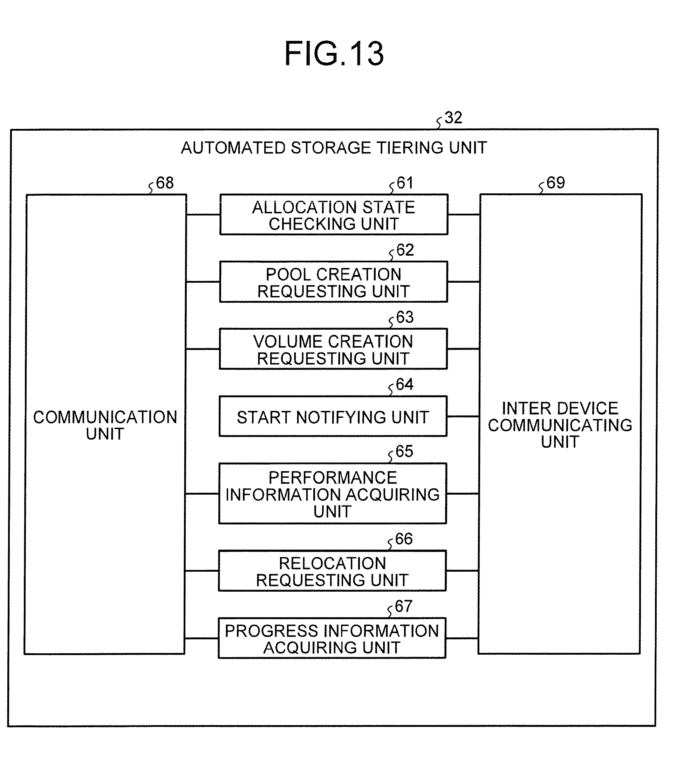

In the following, the functional configuration of the automated storage tiering unit 32 will be described. FIG. 13 is a schematic diagram illustrating the functional configuration of the automated storage tiering unit 32. As illustrated in FIG. 13, the automated storage tiering unit 32 includes an allocation state checking unit 61, a pool creation requesting unit 62, a volume creation requesting unit 63, a start notifying unit 64, a performance information acquiring unit 65, a relocation requesting unit 66, and a progress information acquiring unit 67. Furthermore, the automated storage tiering unit 32 includes a communication unit 68 and an inter device communicating unit 69.

On the basis of the instruction from the pool management unit 43, the allocation state checking unit 61 checks with the storage device 2 about the allocation state of the disks 6 and sends, as a response, the information related to the allocation state of the disks 6 to the pool management unit 43.

On the basis of the instruction from the pool management unit 43, the pool creation requesting unit 62 requests the storage device 2 to create a tier pool and sends, as a response, the information related to the created tier pool to the pool management unit 43.

On the basis of the instruction from the volume management unit 45, the volume creation requesting unit 63 requests the storage device 2 to create a volume and sends, as a response, the information related to the created volume to the volume management unit 45.

On the basis of the instruction to start the tiering control received from the operation terminal 4, the start notifying unit 64 notifies the storage device 2 that the tiering control is started. The performance information acquiring unit 65 requests, at intervals of, for example, 5 minutes, the storage device 2 to acquire performance information and acquires the performance information from the storage device 2. Furthermore, the performance information acquiring unit 65 stores the acquired performance information in the performance information storing unit 33. The performance information storing unit 33 accumulates the performance information within an evaluation period specified by a hierarchical policy. The evaluation period mentioned here is, for example, one hour, one day, or the like. For the tier pool for a single tier, the performance information acquiring unit 65 automatically acquires performance information and the performance information storing unit 33 stores the performance information for up to seven days.

On the basis of the instruction about relocation from the relocation instructing unit 50, the relocation requesting unit 66 requests the storage device 2 to perform the relocation; receives information, such as a RAID group at the relocation destination, from the storage device 2; and sends, as a response, to the relocation instructing unit 50.

On the basis of the instruction about the progress check received from the relocation checking unit 51, the progress information acquiring unit 67 requests the storage device 2 to send the progress information on the relocation and sends, to the relocation checking unit 51 as a response, the progress information received from the storage device 2.

The communication unit 68 communicates with the storage management unit 31 and the inter device communicating unit 69 communicates with the storage device 2 and the operation terminal 4 via the LAN 5.

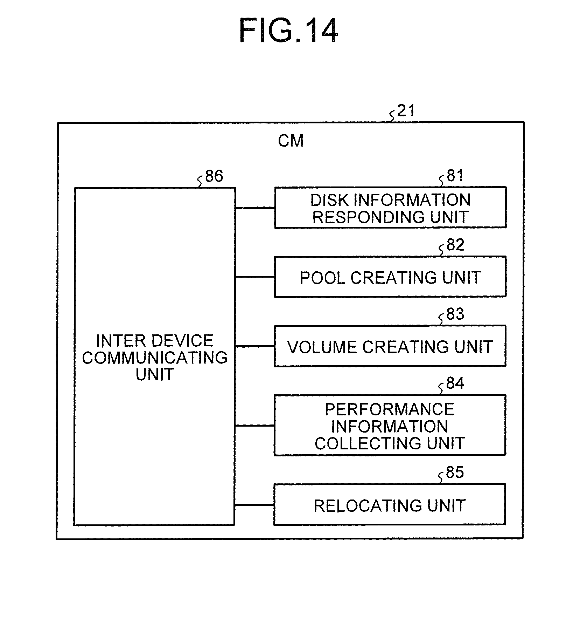

In the following, the functional configuration of the CM 21 will be described. FIG. 14 is a schematic diagram illustrating the functional configuration of the CM 21. As illustrated in FIG. 14, the CM 21 includes a disk information responding unit 81, a pool creating unit 82, a volume creating unit 83, a performance information collecting unit 84, a relocating unit 85, and an inter device communicating unit 86.

On the basis of the instruction to check the disk allocation state received from the allocation state checking unit 61, the disk information responding unit 81 sends allocation information on a disk to the allocation state checking unit 61 as a response.

On the basis of the creation request for a tier pool received from the pool creation requesting unit 62, the pool creating unit 82 creates a tier pool and sends the information related to the created tier pool to the pool creation requesting unit 62 as a response.

On the basis of the creation request for a volume received from the volume creation requesting unit 63, the volume creating unit 83 creates a volume and sends the information related to the created volume to the volume creation requesting unit 63 as a response.

On the basis of the acquisition request for the performance information received from the performance information acquiring unit 65, the performance information collecting unit 84 collects the performance information and sends the collected information to the performance information acquiring unit 65. An IOPS value for each block is included in the performance information.

On the basis of the relocation request received from the relocation requesting unit 66, the relocating unit 85 relocates the block specified by the relocation list 56 and sends, to the relocation requesting unit 66 as a response, the information on the target for the relocation. When the blocks are being moved among subpools, the relocating unit 85 reserves a disk space in the move destination from a RAID group handled by the same CM 21 as that handles the volume.

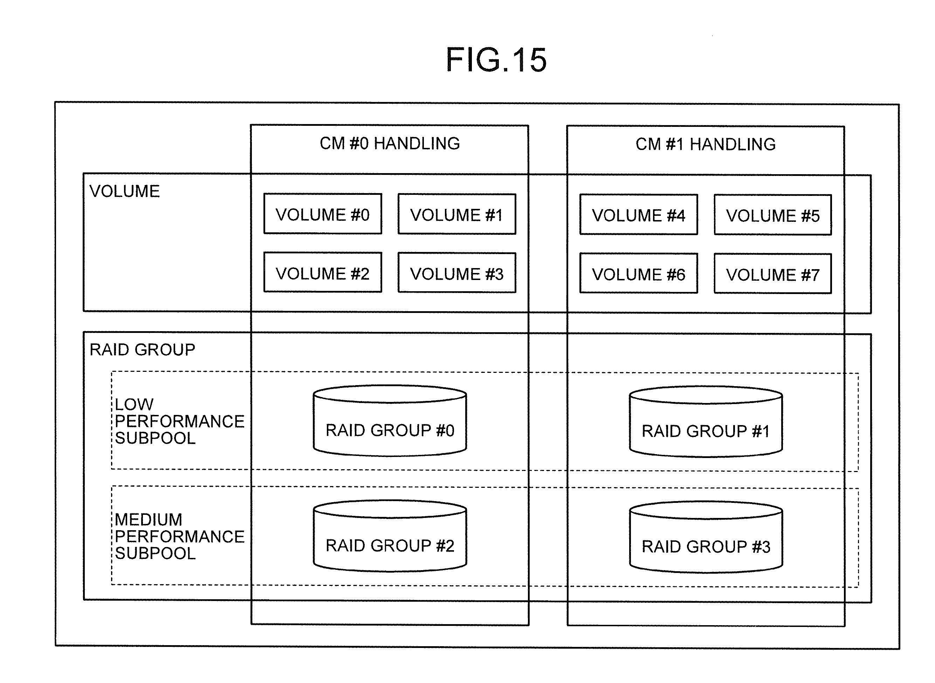

FIG. 15 is a schematic diagram illustrating a handling CM 21. As illustrated in FIG. 15, for volumes, a CM #0 handles volumes #0 to #3. Furthermore, for RAID groups, the CM #0 handles a RAID group #0 that is included in the low performance subpool and handles the RAID group #2 that is included in the medium performance subpool. Furthermore, for volumes, a CM #1 handles volumes #4 to #7. For RAID groups, the CM #1 handles the RAID group #1 that is included in the low performance subpool and handles the RAID group #3 that is included in the medium performance subpool.

Consequently, when, for example, one of the CMs illustrated in FIG. 15 relocates a block in volume #0 to the low performance subpool, the relocating unit 85 acquires a disk space from the RAID group #0 that is handled by the CM #0 that handles the volume #0.

As described above, because the relocating unit 85 reserves a disk space in the move destination from the RAID group handled by the same CM 21 as that handles the volume, it is possible to suppress the degradation of the IO performance due to the use of different handling CMs 21.

The inter device communicating unit 86 communicates with the operation management device 3 via the LAN 5. For example, the inter device communicating unit 86 receives an instruction from the operation management device 3 and sends a response to the instruction to the operation management device 3.

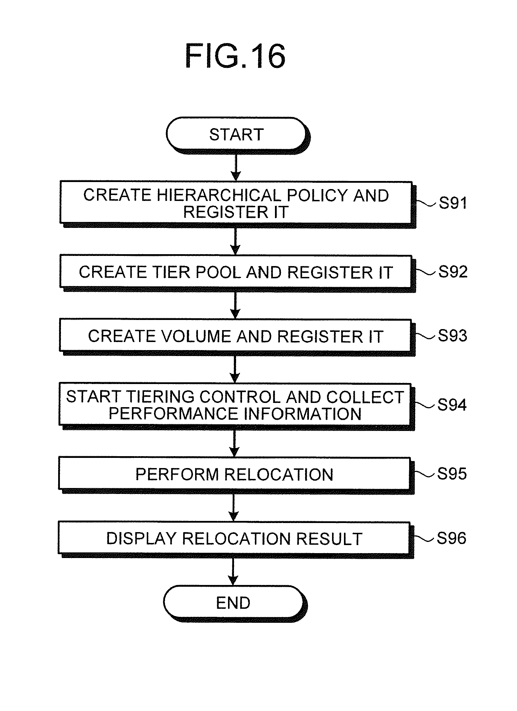

In the following, the flow of a process performed by the storage system 1 will be described. FIG. 16 is a flowchart illustrating the flow of a process performed by the storage system 1. As illustrated in FIG. 16, first, the storage system 1 creates a hierarchical policy on the basis of an instruction from an administrator and then registers the policy in the policy management table 42 (Step S91).

Then, the storage system 1 creates a tier pool on the basis of the instruction from the administrator and then registers the created tier pool in the pool management table 44 (Step S92). Then, the storage system 1 creates a volume on the basis of an instruction from the administrator and registers the volume in the volume management table 46 (Step S93).

Thereafter, business software running on the server 7 starts a business process by using the volume. Then, the storage system 1 starts the tiering control on the basis of an instruction from the administrator and then collects the performance information (Step S94).

Then, the storage system 1 executes the relocation of blocks on the basis of information on the volume, the hierarchical policy, and the performance information (Step S95). The processes at Steps S94 and S95 are executed on the basis of the hierarchical policy during the business process. When a request is received from the administrator, the storage system 1 checks the progress status of the relocation and then displays the relocation result (Step S96).

As described above, by relocating blocks on the basis of the volume information, the hierarchical policy, and the performance information, the storage system 1 can improve the IO performance.

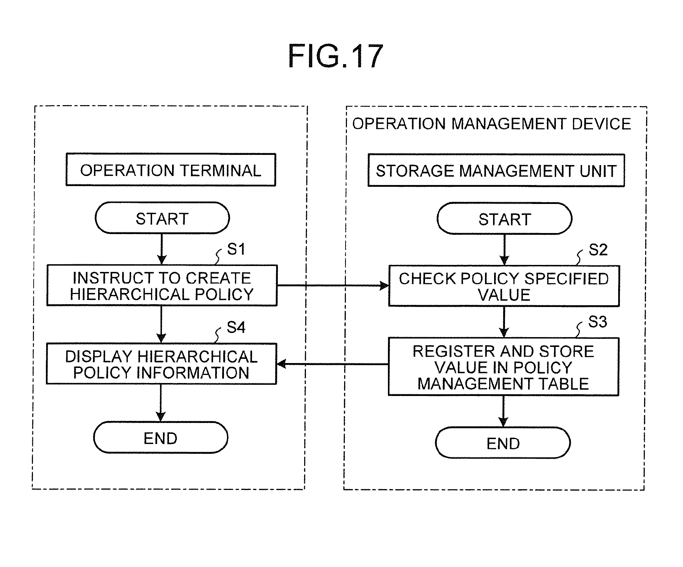

In the following, the flow of a policy registration process will be described. FIG. 17 is a flowchart illustrating the flow of a policy registration process. The processes illustrated in FIG. 17 correspond to the process at Step S91 illustrated in FIG. 16.

As illustrated in FIG. 17, on the basis of an instruction from the administrator, the operation terminal 4 instructs the operation management device 3 to create a hierarchical policy (Step S1). Then, the storage management unit 31 checks the policy specified value specified by the administrator (Step S2) and then registers and stores the policy specified value in the policy management table 42 (Step S3). The policy specified value includes therein information indicating whether the relocation is on the basis of the specified capacity. Then, the storage management unit 31 instructs the operation terminal 4 to display the information on the registered hierarchical policy and then the operation terminal 4 displays the information on the hierarchical policy (Step S4).

As described above, by specifying a hierarchical policy, the administrator can efficiently use the storage system 1.

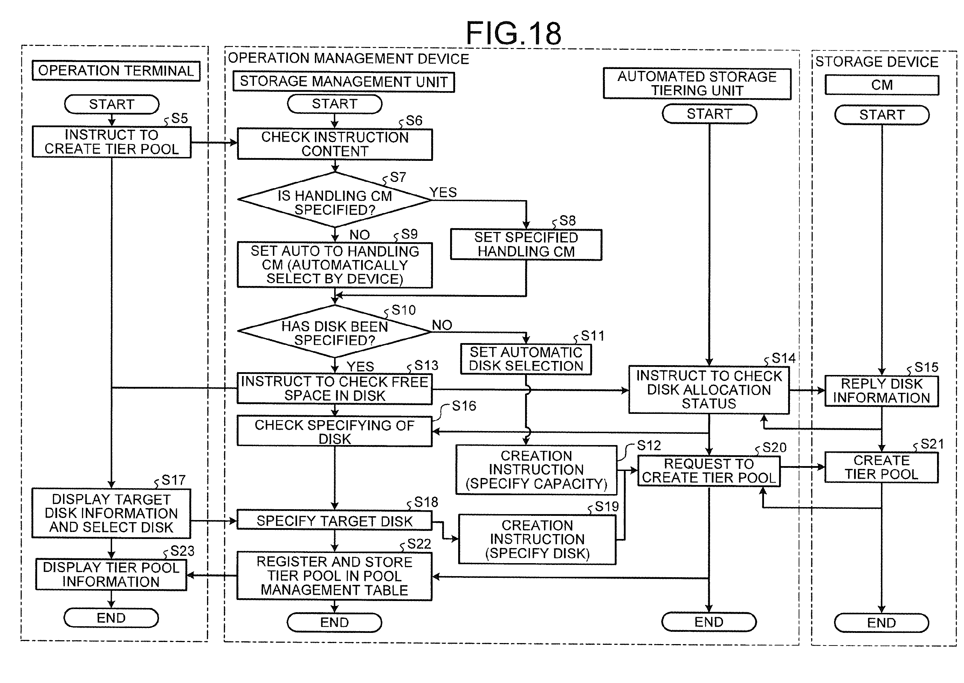

In the following, the flow of a tier pool registration process will be described. FIG. 18 is a flowchart illustrating the flow of a tier pool registration process. The processes illustrated in FIG. 18 correspond to the process at Step S92 illustrated in FIG. 16.

As illustrated in FIG. 18, on the basis of an instruction from the administrator, the operation terminal 4 instructs the operation management device 3 to create a tier pool (Step S5). Then, the storage management unit 31 checks the content specified by the administrator (Step S6). In addition to the tier pool constituted by multiple tiers, the administrator can specify a tier pool constituted by a single tier.

Then, the storage management unit 31 determines whether the handling CM 21 is specified (Step S7). If the determination result indicates that the handling CM 21 is specified, the storage management unit 31 sets the specified handling CM 21 to instruction information (Step S8). In contrast, if the handling CM 21 is not specified, the storage management unit 31 sets, to the instruction information, "Auto" indicating that the handling CM 21 can be automatically selected (Step S9).

Then, the storage management unit 31 determines whether a disk has been specified (Step S10). If a disk has not been specified, the storage management unit 31 sets the automatic disk selection to the instruction information (Step S11). Then, the storage management unit 31 sends an instruction to create a tier pool to the automated storage tiering unit 32 together with the instruction information (Step S12).

In contrast, if a disk has been specified, the storage management unit 31 sends an instruction to check a free space of the disk to the automated storage tiering unit 32 (Step S13) and the automated storage tiering unit 32 instructs the storage device 2 to check the disk allocation state (Step S14). Then, the storage device 2 sends, as a reply, the disk information related to the disk allocation state (Step S15) and the automated storage tiering unit 32 sends the disk information to the storage management unit 31. Then, the storage management unit 31 checks the specifying of the disk (Step S16) and instructs to the operation terminal 4 to display the information on the selected target disk. Then, the operation terminal 4 displays the information on the target disk and allows the administrator to select a disk (Step S17). Then, the storage management unit 31 specifies the selected target disk (Step S18) and sends, to the automated storage tiering unit 32, the instruction to create a tier pool together with the instruction information (Step S19).

When the instruction to create a tier pool is received together with the instruction information, the automated storage tiering unit 32 requests the storage device 2 to create a tier pool (Step S20) and then the storage device 2 creates a tier pool (Step S21). Then, the storage device 2 sends the information on the created tier pool to the automated storage tiering unit 32. The automated storage tiering unit 32 sends the information on the tier pool to the storage management unit 31. Then, the storage management unit 31 registers, by using the information on the tier pool, the tier pool in the pool management table 44 (Step S22) and instructs the operation terminal 4 to display the information on the tier pool. Then, the operation terminal 4 displays the information on the tier pool (Step S23).

As described above, if a disk is not specified, the storage management unit 31 sets the automatic disk selection in the instruction information and instructs to create a tier pool together with the instruction information. Consequently, an administrator can easily create a tier pool.

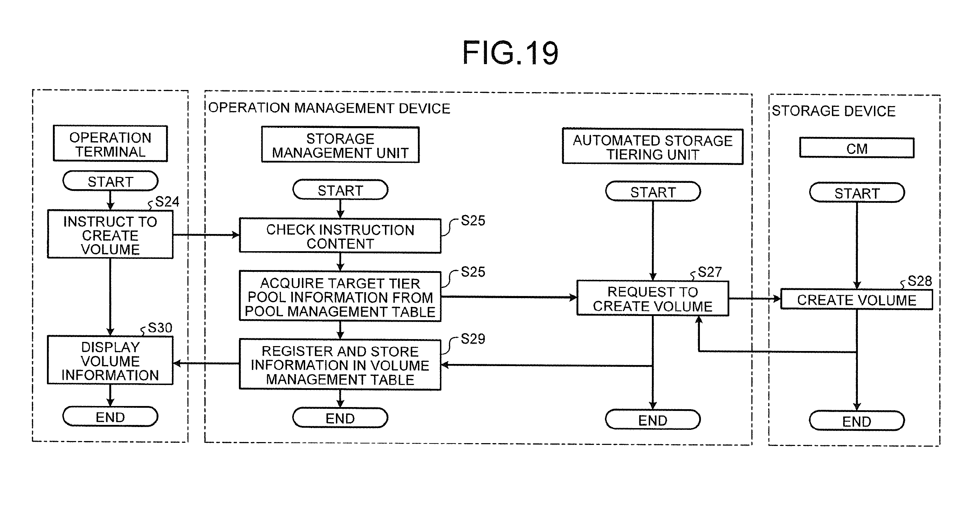

In the following, the flow of a volume creating process will be described. FIG. 19 is a flowchart illustrating the flow of a volume creating process. The processes illustrated in FIG. 19 correspond to the process at Step S93 illustrated in FIG. 16.

As illustrated in FIG. 19, on the basis of an instruction from an administrator, the operation terminal 4 instructs the operation management device 3 to create a volume (Step S24). Then, the storage management unit 31 checks the content specified by the administrator (Step S25), and acquires, from the pool management table 44, the information on the target tier pool specified by the content of the instruction (Step S26). An allocation percentage of a subpool is sometimes included in the content specified by the administrator. Then, the storage management unit 31 sends an instruction to create a volume to the automated storage tiering unit 32 together with the information on the target tier pool and the automated storage tiering unit 32 requests the storage device 2 to create a volume (Step S27).

Then, the storage device 2 creates a volume (Step S28) and sends the information on the created volume to the automated storage tiering unit 32. The automated storage tiering unit 32 sends the information on the volume to the storage management unit 31.

Then, the storage management unit 31 registers the information on the volume in the volume management table 46 (Step S29) and instructs the operation terminal 4 to display the information on the volume. Then, the operation terminal 4 displays the information on the volume (Step S30).

As described above, the storage management unit 31 acquires the information on the target tier pool from the pool management table 44 and instructs to create a volume together with the information on the target tier pool, thereby it is possible to create a volume on the basis of a hierarchical policy.

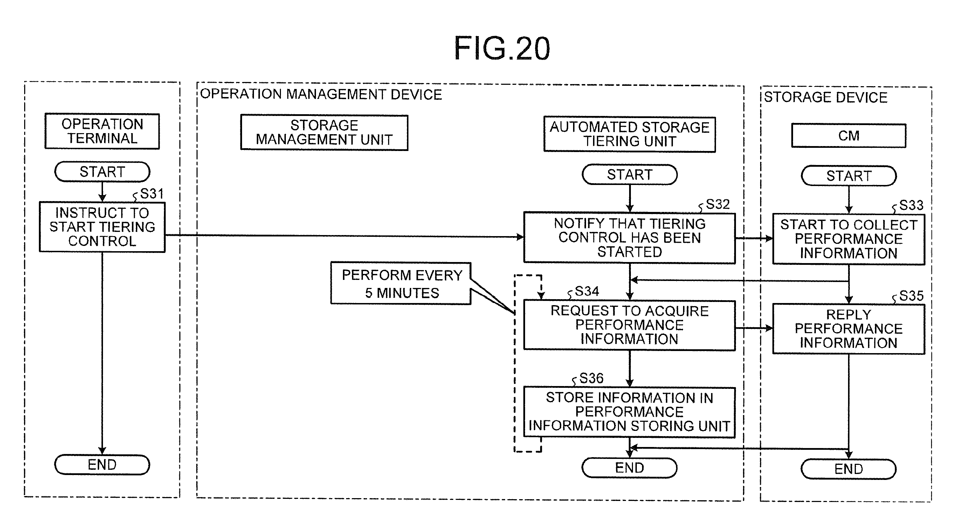

In the following, the flow of a performance information collecting process will be described. FIG. 20 is a flowchart illustrating the flow of a performance information collecting process. The processes illustrated in FIG. 20 correspond to the process at Step S94 illustrated in FIG. 16.

As illustrated in FIG. 20, the operation terminal 4 instructs the operation management device 3 to start the tiering control on the basis of the instruction from the administrator (Step S31). Then, the automated storage tiering unit 32 notifies the storage device 2 that the tiering control is started (Step S32). Then, the storage device 2 starts to collect the performance information (Step S33).

Then, the automated storage tiering unit 32 requests the storage device 2 to acquire performance information (Step S34) and the storage device 2 sends, as a reply, the collected performance information (Step S35). Then, the automated storage tiering unit 32 stores the performance information in the performance information storing unit 33 (Step S36). The processes at Steps S34 to S36 are periodically performed at intervals of, for example, 5 minutes.

As described above, because the automated storage tiering unit 32 stores, in the performance information storing unit 33, the performance information received from the storage device 2, the storage management unit 31 can allocate a block to each subpool by referring to the performance information storing unit 33.

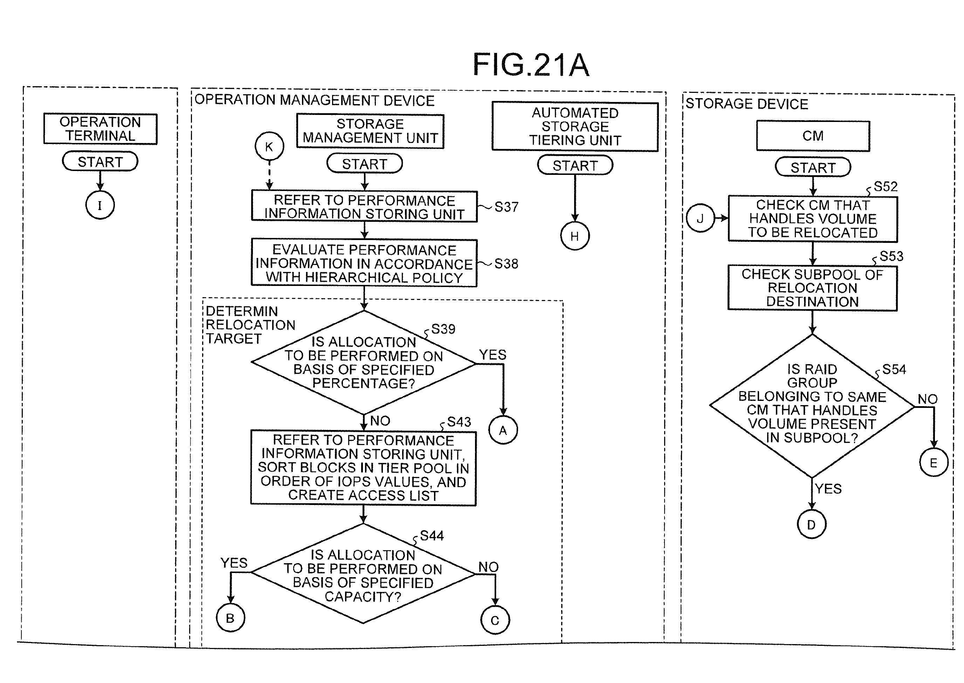

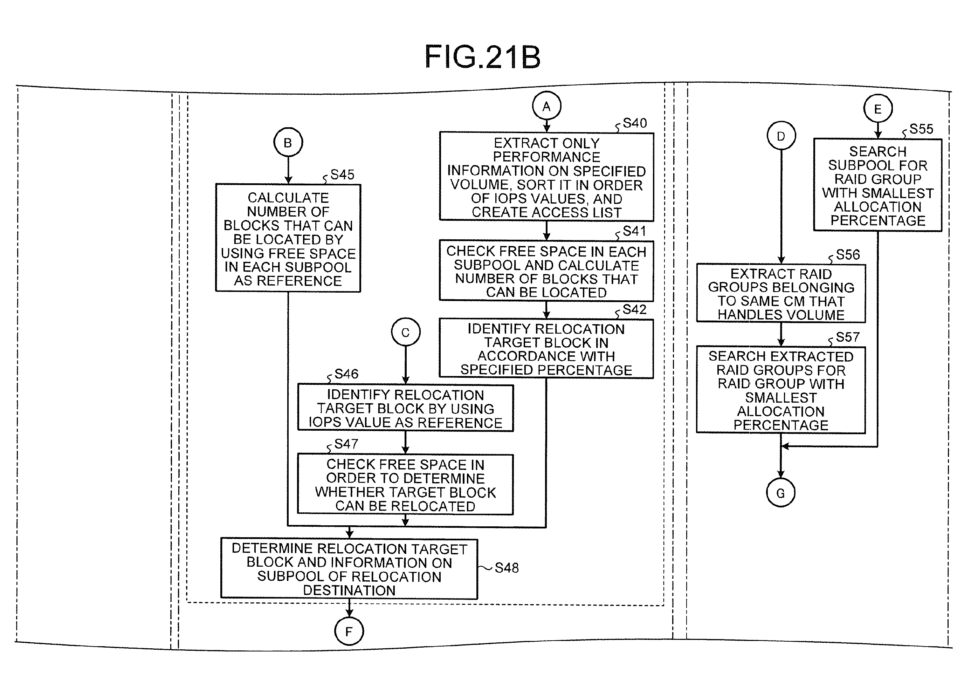

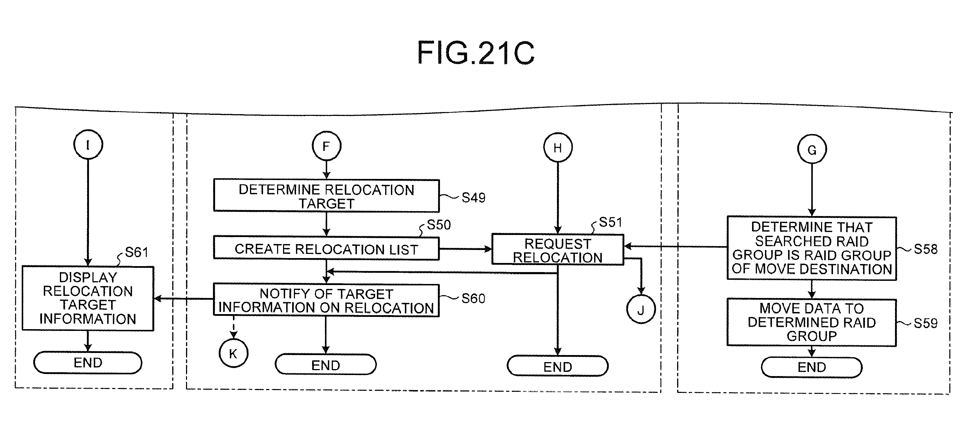

In the following, the flow of a relocation process will be described. FIG. 21A-21C are flowcharts illustrating the flow of a relocation process. The processes illustrated in FIG. 21A-21C correspond to the process at Step S95 illustrated in FIG. 16.

As illustrated in FIG. 21A-21C, the storage management unit 31 refers to the performance information storing unit 33 (Step S37) and evaluates the performance information in accordance with the hierarchical policy (Step S38). Then, the storage management unit 31 determines whether allocation is to be performed on the basis of the specified percentage (Step S39). If the determination result indicates that allocation is to be performed on the basis of the specified percentage, the storage management unit 31 extracts only the performance information on the specified percentage of volumes from the performance information storing unit 33, sorts the performance information in the order of IOPS values, and creates the access list 55 (Step S40). Then, the storage management unit 31 checks a free space in each subpool and calculates the number of blocks that can be located (Step S41). Then, the storage management unit 31 identifies a relocation target block in accordance with the specified percentage (Step S42) and proceeds to Step S48.

In contrast, if the allocation is not to be performed on the basis of the specified percentage, the storage management unit 31 refers to the performance information storing unit 33, sorts the blocks in the tier pool in the order of IOPS values, and creates the access list 55 (Step S43). Then, the storage management unit 31 determines whether allocation is to be performed on the basis of specifying the capacity (Step S44). If the allocation is to be performed on the basis of the specified capacity, the storage management unit 31 calculates the number of blocks that can be located by using a free space in each subpool as a reference (Step S45) and proceeds to Step S48. In contrast, if the allocation is not to be performed on the basis of the specified capacity, the storage management unit 31 identifies a relocation target block by using the IOPS value as a reference (Step S46) and checks the free space in order to determine whether the target block can be relocated (Step S47).

Then, the storage management unit 31 determines a relocation target block and information on the subpool of the relocation destination (Step S48) and then determines the relocation target on the basis of the determined information (Step S49). Then, the storage management unit 31 creates the relocation list 56 (Step S50) and instructs the automated storage tiering unit 32 to perform relocation. Thereafter, the automated storage tiering unit 32 requests the storage device 2 to perform relocation (Step S51).

Then, the CM 21 in the storage device 2 checks the CM 21 that handles the volume to be relocated (Step S52) and checks the subpool of the relocation destination (Step S53). Then, the storage device 2 determines whether a RAID group belonging to the same CM 21 that handles the volume is present in the subpool (Step S54).

If the determination result indicates that a RAID group belonging to the same CM 21 that handles the volume is not present in the subpool, the storage device 2 searches the subpool for a RAID group with the smallest allocation percentage (Step S55) and proceeds to Step S58. In contrast, a RAID group belonging to the same CM 21 that handles the volume is present in the subpool, the storage device 2 extracts RAID groups belonging to the same CM 21 that handles the volume (Step S56) and searches the extracted RAID groups for a RAID group with the smallest allocation percentage (Step S57).

Then, the storage device 2 determines that the obtained RAID group is the RAID group of the move destination (Step S58); sends, to the operation management device 3, information on the RAID group of the move destination; and moves the data to the determined RAID group (Step S59).

Furthermore, the storage management unit 31 notifies the operation terminal 4 of information on the relocation target (Step S60) and then the operation terminal 4 displays the information on the relocation target (Step S61). If the number of blocks to be relocated exceeds 64, the processes at Steps S50 to S61 are repeated for every 64 blocks. Furthermore, the relocation process is repeated on the basis of the specified hierarchical policy.

As described above, by determining the relocation target on the basis of a hierarchical policy, the storage system 1 can control relocation of a block on the basis of the policy received from an administrator.

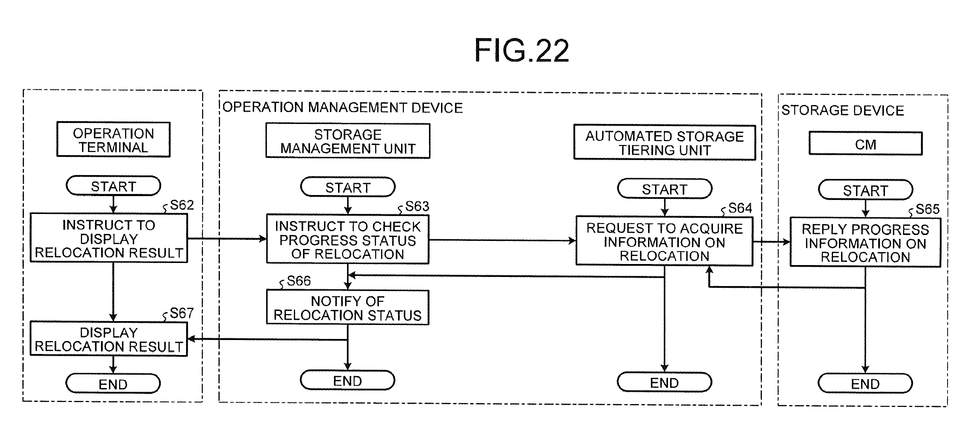

In the following, the flow of a relocation result displaying process will be described. FIG. 22 is a flowchart illustrating the flow of a relocation result displaying process. The processes illustrated in FIG. 22 correspond to the process at Step S96 illustrated in FIG. 16.

As illustrated in FIG. 22, on the basis of an instruction from an administrator, the operation terminal 4 instructs the operation management device 3 to display the relocation result (Step S62). Then, the storage management unit 31 instructs the automated storage tiering unit 32 to check the progress status of the relocation (Step S63).

Then, the automated storage tiering unit 32 requests the storage device 2 to acquire the information on the relocation (Step S64) and the storage device 2 sends, to the operation management device 3 as a reply, the progress information on the relocation (Step S65). Then, the storage management unit 31 notifies the operation terminal 4 of the status of the relocation (Step S66) and the operation terminal 4 displays the relocation result (Step S67).

In this way, because the operation terminal 4 displays the relocation result, an administrator can evaluate the relocation on the basis of a hierarchical policy and volume information.

As described above, in the embodiment, the policy determining unit 48a determines an allocation method of blocks on the basis of the information on hierarchical policies stored in the policy management table 42 and the information on volumes stored in the volume management table 46. Then, on the basis of the determination performed by the policy determining unit 48a, the first allocating unit 48b performs allocation on the basis of the specified capacity. Consequently, the storage system 1 can efficiently use a high performance storage from among multiple storages each having different performance. Furthermore, on the basis of the determination performed by the policy determining unit 48a, the second allocating unit 48c performs allocation on the basis of the specified percentage for each volume. Consequently, an administrator can appropriately use a subpool for each volume and can create a tier pool suitable for business.

Furthermore, in the embodiment, on the basis of an instruction from an administrator, the pool management unit 43 creates a tier pool constituted by a single subpool and registers the created tier pool in the pool management table 44. Then, the performance information acquiring unit 65 automatically acquires the performance information on the tier pool constituted by a single subpool. Consequently, the administrator can acquire the information used to compare with a case in which the AST operation is performed.

Furthermore, in the embodiment, the CM 21 determines a RAID group of the relocation destination from the RAID group handled by the same CM 21 as that handles the volume to be relocated. Consequently, it is possible to suppress the degradation of the IO performance due to the use of the CM 21 handling a volume that is different from the CM 21 handling a RAID group.

Furthermore, in the embodiment, when the pool management unit 43 creates a tier pool, if one of the disks 6 is not specified, the pool management unit 43 instructs the storage device 2 to create a tier pool with the capacity specified by an administrator. Consequently, the administrator can easily create a tier pool without being aware of the installation status of the disks 6.

Furthermore, in the embodiment, for the blocks included in an adjacent subpool with the capacity of 5% in the access list 55, the relocation identifying unit 49 does not use the blocks as the target for the relocation to the adjacent subpool. Consequently, the storage device 2 can prevent less efficient relocation, such as a case in which a block whose IOPS value is similar to that of the block stored in the adjacent subpool is moved to the adjacent subpool.

Furthermore, in the embodiment, a description has been given of the operation management device; however, it is possible to obtain an operation management program having the same function as that performed by the operation management device described in the embodiment by implementing the configuration of the operation management device described in the embodiment by using software. And so, a computer that executes an operation management program will be described.

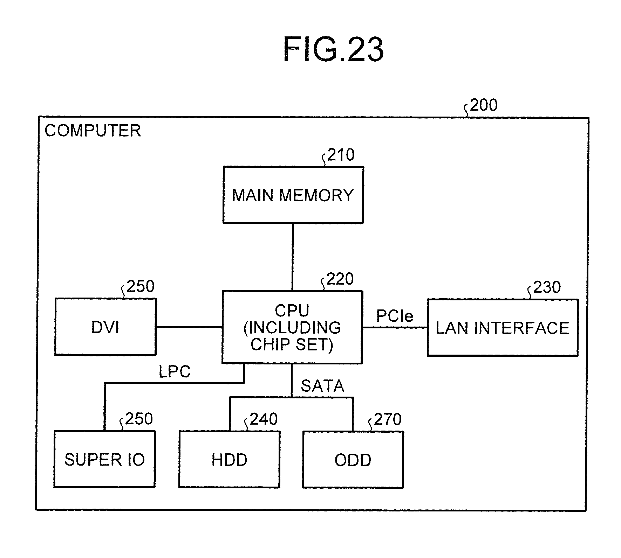

FIG. 23 is a schematic diagram illustrating the hardware configuration of a computer that executes an operation management program. As illustrated in FIG. 23, a computer 200 includes a main memory 210, a central processing unit (CPU) 220, a local area network (LAN) interface 230, and a hard disk drive (HDD) 240. Furthermore, the computer 200 includes a super Input/Output (IO) 250, a digital visual interface (DVI) 260, and an optical disk drive (ODD) 270.

The main memory 210 is a memory that stores therein a program or the mid-result of a running program. The CPU 220 is a central processing unit that reads a program from the main memory 210 and executes the program. The CPU 220 includes a chip set including a memory controller.

The LAN interface 230 is an interface for connecting the computer 200 to another computer via a LAN. The HDD 240 is a disk device that stores therein a program or data. The super IO 250 is an interface for connecting an input device, such as a mouse or a keyboard. The DVI 260 is an interface for connecting a liquid crystal display device. The ODD 270 is a device that reads and writes a DVD.

The LAN interface 230 is connected to the CPU 220 by a PCI express (PCIe). The HDD 240 and the ODD 270 is connected to the CPU 220 by the serial advanced technology attachment (SATA). The super IO 250 is connected to the CPU 220 by the low pin count (LPC).

Then, the operation management program executed by the computer 200 is stored in the DVD, is read by the ODD 270 from the DVD, and is installed in the computer 200. Alternatively, the operation management program is stored in databases in another computer system that is connected via the LAN interface 230, is read from these databases, and is installed in the computer 200. Then, the installed operation management program is stored in the HDD 240, is read by the main memory 210, and is executed by the CPU 220.

In the following, a description will be given of the hardware configuration of the CM 21. FIG. 24 is a schematic diagram illustrating the hardware configuration of the CM 21. As illustrated in FIG. 24, the CM 21 includes a CPU 21a, a RAM 21b, and a flash memory 21c.

The CPU 21a is a processing unit that reads a program from the flash memory 21c and executes the program. The random access memory (RAM) 21b is a volatile memory that stores therein data. The flash memory 21c is a memory that stores therein a program used to implement the function performed by the CM 21 illustrated in FIG. 14.

In the embodiment, a description has been given of the storage system 1 that includes the storage device 2 and the operation management device 3; however, the present invention is not limited thereto. For example, the present invention may be similarly applied to a storage system in which the function performed by the operation management device 3 is included in the storage device.

Furthermore, in the embodiment, a description has been given of a case in which a tier pool includes three subpools; however, the present invention is not limited thereto. For example, the present invention may be applied to a tier pool that includes more than 3 subpools.

Furthermore, in the embodiment, a description has been given of a case in which a HDD and an SSD are used as a disk; however, the present invention is not limited thereto. For example, the present invention may be applied in a case in which another storage is used as a disk.

According to an aspect of an embodiment of the present invention, an advantage is provided in that, from among multiple storages each having different performance, a high performance storage can be efficiently used.

## Claims

1. A storage system (1) comprising:
an allocating unit (48) that sequentially allocates, by giving priority to a high performance storage from among multiple storages each having different performance, one of the storages to data in the order the access frequency of the data is high;
a identifying unit (49) that identifies, as the target for relocation from among pieces of data to each of which a storage is allocated by the allocating unit (48), data to which a storage that is different from the storage that currently stores the data is allocated; and
a control unit (85) that relocates the data identified, by the identifying unit (49), as the target for the relocation.

2. The storage system (1) according to claim 1, wherein, when a percentage in predetermined storage units is set, the allocating unit (48c) sequentially allocates, on the basis of the percentage of data stored in the multiple storages in predetermined storage units, the storage in the order the performance of the storage is high to the data in predetermined storage units in the order the access frequency of the data is high.

3. The storage system (1) according to claim 1, wherein, when only storages having the same performance are to be used is set, the allocating unit (48) allocates one of the storages having the same performance to the data.

4. The storage system (1) according to claim 1, further comprising multiple control units (85), wherein
the storages having the same performance are grouped into multiple groups,
one of the multiple control units (85) is allocated to the data in predetermined storage units and is allocated to a group, and
when each of the control units (85) relocates the data, each of the control units (85) uses, as a storage of the move destination for the data to be relocated, a storage belonging to a group, to which a control unit (85) is allocated, the control unit being the same control unit to which the data, in predetermined storage units, that includes the data to be relocated is allocated.

5. The storage system (1) according to claim 1, further comprising a creation instructing unit (43, 62) that selects, when a reservation of a storage area is set without specifying any storage, a storage and that instructs the control unit to create the storage area by using the selected storage.

6. The storage system (1) according to claim 1, wherein the identifying unit (49) sequentially excludes, from among the pieces of data identified as the target for the relocation, a predetermined percentage of data from among pieces of data stored in an adjacent storage in the order the access frequency of the data is near.

7. A non-transitory computer-readable storage medium having stored therein an operation management program causing a computer to execute a process comprising:
allocating, sequentially by giving priority to a high performance storage from among multiple storages each having different performance, one of the storages to data in the order the access frequency of the data is high;
identifying, as the target for relocation from among pieces of data to each of which a storage is allocated, data to which a storage that is different from the storage that currently stores the data is allocated; and
instructing a control device that controls the storages to relocate the data identified as the target for the relocation.

8. An operation management method comprising:
allocating, sequentially by giving priority to a high performance storage from among multiple storages each having different performance, one of the storages to data in the order the access frequency of the data is high;
identifying, as the target for relocation from among pieces of data to each of which a storage is allocated, data to which a storage that is different from the storage that currently stores the data is allocated; and
instructing a control device that controls the storages to relocate the data identified as the target for the relocation.
